# EUROPEAN PATENT APPLICATION

(11) **EP 4 360 821 A1**
(43) Date of publication of application: **01.05.2024**
(21) Application number: 23204798.5
(22) Date of filing: 20.10.2023
(51) Int. Cl.: B25J 9/16

(54) **METHOD, APPARATUS AND COMPUTER-READABLE STORAGE MEDIUM FOR DETERMINING A PATH FOR PLACING AN OBJECT**

(30) Priority: 25.10.2022 CN 202211311008
(71) Applicant: Robert Bosch GmbH, 70442 Stuttgart (DE)
(72) Inventor: DING, Kai, Shanghai, 200335 (CN); DING, Wan, Shanghai, 200335 (CN); XIONG, Heng, Shanghai, 200335 (CN); Xu, Jianfeng, Shanghai, 200335 (CN)

(57) **Abstract**

The present disclosure provides a method, apparatus, and computer-readable storage medium for determining a path for placing an object. This method includes: determining a final target position of a current object to be placed in an environment based on an object placement situation in the environment; determining whether a collision occurs when moving the current object in a horizontal straight line to an initial target position in surrounding space of the final target position, wherein horizontal plane projections of the current object at the initial target position and the final target position are overlapping, and the initial target position and the final target positions are at different heights; and determining a final path for placing the current object at the final target position based on the result from the determination on whether a collision occurs, wherein no collision will occur when the current object moves along the final path.

## Description

### Technical Field

The present disclosure relates to the field of robot technology, and more particularly, to a method, apparatus, and computer-readable storage media for determining a path for placing an object.

### Background Art

In recent years, with the increasingly extensive research of robot technology, the application of robots (e.g. robotic arms) in areas such as palletizing (e.g., stacking boxes) has rapidly developed, thereby greatly reducing labor costs. In such application scenarios, the robot's task is usually to move and stack designated objects (such as boxes) according to a certain pattern. In this process, the trajectory planning of the robot will be crucial.

### Summary of the Invention

In view of this, the embodiments of the present disclosure provide a method, apparatus, and computer-readable storage medium for determining a path for placing an object.

According to one aspect, the embodiments of the present disclosure provide a method for determining a path for placing an object, including: determining a final target position of a current object to be placed in an environment based on an object placement situation in the environment; determining whether a collision occurs when moving the current object in a horizontal straight line to an initial target position in surrounding space of the final target position, wherein horizontal plane projections of the current object at the initial target position and the final target position are overlapping, and the initial target position and the final target positions are at different heights; and determining a final path for placing the current object at the final target position based on the result from the determination on whether a collision occurs, wherein no collision will occur when the current object moves along the final path.

According to another aspect, the embodiments of the present disclosure provide an apparatus for determining a path of an object, including: a first determination unit, configured to determine a final target position of a current object to be placed in an environment based on an object placement situation in the environment; a second determination unit, configured to determine whether a collision occurs when moving the current object in a horizontal straight line to an initial target position in surrounding space of the final target position, wherein horizontal plane projections of the current object at the initial target position and the final target position are overlapping, and the initial target position and the final target positions are at different heights; and a third determination unit, configured to determine a final path for placing the current object at the final target position based on the result from the determination on whether a collision occurs, wherein no collision will occur when the current object moves along the final path.

According to another aspect, the embodiments of the present disclosure provide an apparatus for determining a path of an object, including: at least one processor; a memory in communication with the at least one processor, wherein the memory stores an executable code, and the executable code, when executed by the at least one processor, allows the at least one processor to perform the above-mentioned method.

According to another aspect, the embodiments of the present disclosure provide a computer-readable storage medium, wherein the computer-readable storage medium stores an executable code, and the executable code, when executed, allows a computer to perform the above-mentioned method.

### Description of Drawings

A more detailed description of exemplary embodiments of the present disclosure is provided with reference to the drawings, in which the purposes, features, and advantages of the exemplary embodiments of the present disclosure and others will become more apparent, wherein in the various drawings, the same reference numerals generally represent the same elements.
Figure 1A and Figure 1B are schematic diagrams of example scenarios of embodiments to which the present disclosure can be applied.
Figure 2 is a schematic flowchart illustrating the method for determining the path for placing the object according to some embodiments.
Figure 3 is a schematic flowchart illustrating the process for determining the path for placing the object according to some embodiments.
Figure 4A shows an example of grid division associated with height values.
Figure 4B shows an example of one candidate entry position
Figure 5 shows an example of the application scenario for the first movement scheme.
Figure 6A to Figure 6C show examples of application scenarios for the second movement scheme.
Figure 7 shows an example of the application scenario for the third movement scheme.
Figure 8 is a schematic block diagram illustrating the apparatus for determining the path for placing the object according to some embodiments.
Figure 9 is a schematic block diagram illustrating the apparatus for determining the path for placing the object according to some embodiments.

### Specific Embodiments

The subject matter described herein is hereby discussed with reference to various embodiments. It should be understood that discussions about these embodiments are provided to aid those skilled in the art in better understanding and realization of the subject matter described herein rather than limiting the scope of protection, applicability, or examples described in the Claims. Changes can be made to the functions and arrangements of the elements discussed without departing from the scope of protection of the Claims. Various processes or components may be omitted, substituted, or added in the various embodiments as needed.

As used herein, the term "comprising" and its variations are open terms and may mean "including but not limited to." The term "based on" may indicate "at least partially based on". The terms "an embodiment," "one embodiment," "some embodiments," etc., may mean "at least one embodiment". The terms "first," "second," etc., may refer to different or the same objects.

At present, robots are broadly used in areas such as palletizing. In the field of palletizing, the task of robots (for example, in the form of a mechanical arm) is usually to move designated objects (such as boxes) according to a certain pattern and stack them in designated positions (such as pallets or containers). In this process, the trajectory planning of the robot is crucial. Good trajectory planning can help avoid a collision between objects, improve the efficiency of palletizing, increase the compactness of object placement to avoid wasting space, and dynamically adapt to different stacking environments.

In view of this, the embodiments of the present disclosure provide a technical solution for determining the path for placing the object, which can reasonably plan the moving path of the object to be placed. The description is given below with reference to the specific embodiments.

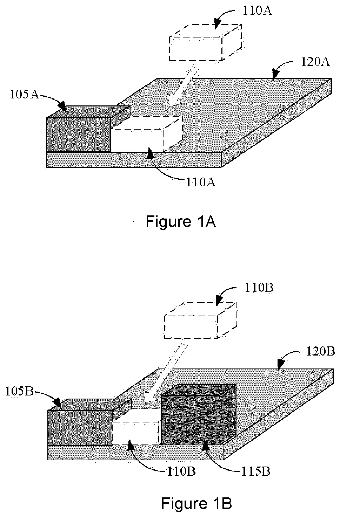

Figure 1A and Figure 1B are schematic diagrams of examples of scenarios of embodiments to which the present disclosure can be applied. It should be understood that the examples in Figure 1A and Figure 1B are only for facilitating a better understanding of the technical solutions of the present disclosure rather than limiting the application scope of the present disclosure.

In the example of Figure 1A, assume that an object 105A has been placed on a pallet 120A. Then, a robot (not shown) needs to place a current object 110A on the pallet 120A. Then, the robot's control device can determine the final target position of the current object 110A and the movement path to place the current object 110A from the current position (position near the starting point of the arrow in Figure 1A) to the final target position (position where the arrow in Figure 1A points at). As shown in Figure 1A, assume that the final target position of the current object 110A may be located on one side of the object 105A. In this way, the control device may control the robot to place the current object 110A at the final target position on the pallet 120A according to the corresponding movement path.

In the example of Figure 1B, assume that the objects 105B and 115B have been placed on a pallet 102B. Then, a robot (not shown) needs to place a current object 110B on the pallet 120B. So, the robot's control device can determine the final target position of the current object 110B on the pallet 120B and the movement path to place the current object 110B at the final target position. As shown in Figure 1B, assume that the final target position of the current object 110B is between the object 105B and the object 110B. Then, the control device may control the robot to place the current object 110B at the final target position on the pallet 120B according to the corresponding movement path.

Figure 1A and Figure 1B only show the simple application scenarios. In actual application scenarios, the stacking of the objects may be more complicated than what is shown in Figure 1A and Figure 1B, but the embodiments of the present disclosure can be used to plan the trajectory of the robot.

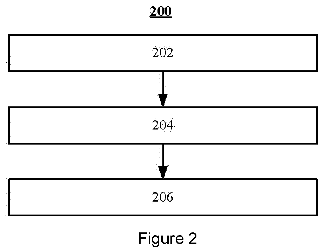

Figure 2 is a schematic flowchart illustrating the method for determining the path for placing the object according to some embodiments. For example, a method 200 may be executed by the control device of the robot.

As shown in Figure 2, in step 202, the final target position of the object to be placed in the environment may be determined based on the object placement situation in the environment.

In step 204, it can be determined whether a collision occurs when moving the current object in a horizontal straight line to an initial target position in surrounding space of the final target position. Specifically, the horizontal plane projections of the current object at the initial target position and the final target position are overlapping. Additionally, the initial target position and the final target position may be at different heights. Specifically, the initial target position may be located directly above the final target position, at a certain distance from the final target position in the vertical direction.

In step 206, the final path for placing the current object at the final target position may be determined based on the result from the determination on whether a collision occurs. Specifically, no collision will occur when the current object moves along the final path.

It can be seen that in the embodiments of the present disclosure, it is determined whether a collision occurs when horizontally moving the current object from the surrounding space of the final target position to directly above the final target position first, and then a collision-free final path is determined based on whether a collision occurs. This can help avoid a collision during the object's movement and improve the efficiency of stacking.

In the embodiments herein, the environment may refer to the space used for placing objects, such as pallets, containers, etc.

In some embodiments, the object placement situation in the environment may be determined in various applicable ways, such as using camera sensors (e.g., 3D cameras) to capture images of the environment, analyzing the images of the environment, and then determining various related information, such as whether different objects have been placed in the environment, the positions where the objects are placed, the sizes of the objects, etc. Then, based on the object placement situation in the environment, the final target position of the current object in the environment can be determined. For example, based on the information such as objects placed in the environment, and with reference to the size and position of each object, and the size of the current object, the final target position of the current object can be determined. The size of the current object may be determined in various ways, such as using camera sensors (e.g., 3D cameras) to capture images of the current object, thereby determining the size of the current object.

It can be understood that as the object to be placed is three-dimensional, the position mentioned herein may be three-dimensional. In some embodiments, the final target position may be represented by a three-dimensional coordinate system. For example, (*xᵢ, yᵢ* , *zᵢ*) may represent the coordinate of a designated point at the final target position. For example, the designated point may be the point at the bottom, left, and rear sides when the current object is at the final target position, and the left-right and front-rear directions may be predefined. (*lᵢ*, *wᵢ* , *hi*) may represent the size of the current object, i.e., length, width, and height (for example, i may represent the index of the current object). In this way, the final target position of the current object may be represented by the coordinate of the designated point and the size of the current object.

Herein, in step 202, the step of determining the final target position may be determ ination of the position in the environment where the current object can be placed, for example, the space at the final target position can hold the current object, such as, the size of the projection area of the space at the final target position on the horizontal plane may be greater than or equal to the area of the bottom surface of the current object. Therefore, the final target position can be determined based on the placement situation of the object placed in the environment, with reference to the size of the current object.

In some embodiments, the surrounding space of the final target position may be a larger space containing the final target position. For example, the projection area of the object may be determined first, i.e. the projection area on the horizontal plane when the object is at the final target position. Then, the predetermined range for the projection area of the object may be expanded, specifically, by expanding the predetermined value around the projection area of the object, an area larger than the projection area of the object can be obtained, and this area can be considered as the projection area of the surrounding space on the horizontal plane.

For example, illustration is made with reference to the coordinates mentioned above. Assume that (*xᵢ, yᵢ , zᵢ*) represents the points at the bottom, left, and rear sides of the current object when it is at the final target position, then the projection area of the object can be expressed as (*x* ∈ [*xi, xᵢ* + *lᵢ* ], y ∈ [*yᵢ*, *yᵢ* + *wᵢ*]). The predetermined range for the projection area of the object is expanded, assumes that the predetermined value a in the positive and negative directions of the x axis is expanded, and the predetermined value b in the positive and negative directions of the y axis is expanded, forming the projection area of the surrounding space on the horizontal plane as (*x* ∈ [*xᵢ* - *a, xᵢ* + *lᵢ* + *a*], *y* ∈ [*yᵢ* - *b, yᵢ* + *wᵢ* + b]). Then, the surrounding space can be defined. For example, based on the projection area of the surrounding space on the horizontal plane, a certain value in the height direction of the environment (e.g., the positive direction of the z-axis) is expanded, thereby forming a three-dimensional space as the above-mentioned surrounding space. For example, the height of the surrounding space may be greater than or equal to the height of the initial target position.

In some embodiments, at least one candidate entry position may be determined in the surrounding space. Each candidate entry position may be at the same height as that of the initial target position, so a horizontal straight line path can be formed from each candidate entry position to the initial target position. Then, it can be sequentially determined whether a candidate entry position exists with regard to at least one candidate entry position so that no collision occurs when moving the current object along the horizontal straight line path from the candidate entry position to the initial target location.

In some embodiments, it can be sequentially determined whether a collision-free candidate entry position exists with regard to at least one candidate entry position in a certain order. For example, the weight value for height of each candidate entry position can be determined. The weight value for height of each candidate entry position may represent the occupancy status of the surrounding space of the candidate entry position, such as whether an object has been placed around the candidate entry position and the height of the placed object. Therefore, it can be understood that the smaller the weight value for height of the candidate entry position, the lower the probability of a collision occurring at that candidate entry position. Therefore, it can be sequentially determined whether a collision-free candidate entry position exists in at least one candidate entry position in the ascending order of weight value for heights.
The description on how to determine the weight value for height of each candidate entry position is given below.

In some realization methods, the weight value for height may be determined with reference to the height value of the grid. The description on how to determine the grid and the height value of the grid is given below first. In some embodiments, the projection area of the surrounding space on the horizontal plane may be divided into a plurality of equal-sized grids, and each grid may have a corresponding height value. The height value of each grid may represent the height of the object occupying the grid. The height value may be the actual height of the object, or a value obtained by processing the actual height of the object in some way, which is not defined herein. Therefore, the smaller the height value of the grid, the smaller the height of the object occupying the grid, or even the grid has not been occupied by any object. For example, if no objects have been placed in a certain grid, the height value of the grid may be 0.

The weight value for height of each candidate entry position may be obtained in the following way: adding the height values of various grids in a peripheral area of a projection area on the horizontal plane when the current object is at the candidate entry position, thereby obtaining the weight value for height of the candidate entry position. Therefore, the weight value for height of each candidate entry position may actually reflect the occupancy status of the surrounding space of the candidate entry position, such as whether an object has been placed and the height of the placed object. The size of the peripheral area may be predefined according to specific application scenarios, actual needs, etc., such as security, computational load, etc. For example, the peripheral area may include a ring of grids surrounding and adjacent to the projection area. Of course, the peripheral area may also include several rings (for example, two or three rings) of grids around and adjacent to the projection area.

In one realization method, the projection area of the environment used for placing objects on the horizontal plane may be divided into equal-sized grids, with corresponding height values assigned to each grid. This may form a height map, and the height values of each grid can be continuously updated as objects are placed.

In some embodiments, various methods may be used to determine whether a collision occurs. For example, the horizontal straight line path may be discretized, and various information such as the size data (e.g., length, width, height) and the height in the path (e.g., the height of the objects placed) of the current object may be referenced to determine whether a collision occurs in the path. For example, the horizontal straight line path may be divided into segments, with each segment represented by a grid, such as the grid size being the same as the grid size mentioned above for the surrounding space. It can be determined whether each grid in the horizontal straight line path is occupied by other objects, thereby determining whether a collision occurs in the path.

In some embodiments, as mentioned above, it can be sequentially determined whether a collision-free candidate position exists with regard to at least one candidate entry position. Once a collision-free candidate entry position is detected, the final path can be determined based on the candidate entry position by using the first movement scheme, without have to continue determining whether a collision occurs when moving the current object along a horizontal straight line path from other candidate entry positions to the initial target position. The first movement scheme uses horizontal and vertical straight line movement. For better description, the candidate entry position herein is referred to as the preferred entry position.

Specifically, the final path may include a horizontal straight line path from the preferred entry position to the initial target position, and a vertical straight line path from the initial target position to the final target position. In this case, the current object may be moved along a horizontal straight line path from the preferred entry position to the initial target position, and then the current object may be moved along a vertical straight line path from the initial target position to the final target position. Throughout the process, a collision that the current object may have can be avoided, thereby improving the efficiency of stacking.

In some cases, the current object may initially be located in a position different from the preferred entry position. So, in some realization methods, the current object may be moved to a position directly above the preferred entry position, and then the current object may be vertically moved from the position to the preferred entry position. Of course, in other realization methods, other methods may be used to move the current object to the preferred entry position, which is not defined herein.

In some embodiments, if it is determined that a collision occurs when moving the current object in a horizontal straight line from the surrounding space of the final target position to the initial target position, it can be determined whether a second movement scheme is feasible. The second movement scheme will allow the current object to be inserted in a tilted state in order to reach the final target position.

If the second movement scheme is feasible, the second movement scheme may be used to determine the final path.

If the second movement scheme is not feasible, a third movement scheme may be used to determine the final path. The third movement scheme will allow the current object to be inserted in a top-down manner in order to reach the final target position.

Herein, the mentioned movement scheme may refer to the entire movement process of the current object from entering the environment to moving to the final target position. For example, the first movement scheme may include the entire process of the current object moving from the preferred entry position to the final target position, the second movement scheme may include the entire process of the current object moving from the initial tilted position to the final target position (which will be further described below), and the third movement scheme may include the entire process of moving from the starting position to the final target position (which will also be further described below).

It can be seen that, due to the use of horizontal and vertical movement in the first movement scheme, there may need to be a certain buffer space around the final target position to prevent the current object from having a collision. If there is no buffer space to use the first movement scheme, consider whether the second movement scheme can be used. The second movement scheme may use a tilted insertion method. The tilted insertion method mentioned herein may refer to the current object itself being in a tilted state (for example, tilted relative to the horizontal plane) and being inserted in the inclined state, in order to reach the final target position. Therefore, the second movement scheme generally requires the current object to be at a certain tilt angle and have a certain buffer space around the final target position to avoid a collision with adjacent objects. In general, the buffer space required for the second movement scheme is smaller than that required for the first movement scheme.

If the second movement scheme is feasible, the final path may be determined based on the second movement scheme. If the second movement scheme is not feasible, for example, in some cases where there may not be a suitable tilt angle or there is not enough buffer space around the final target position, the third movement scheme may be used to determine the final path. The third movement scheme uses the top-down manner, which means placing the current object vertically in the top-down manner to the final target position.

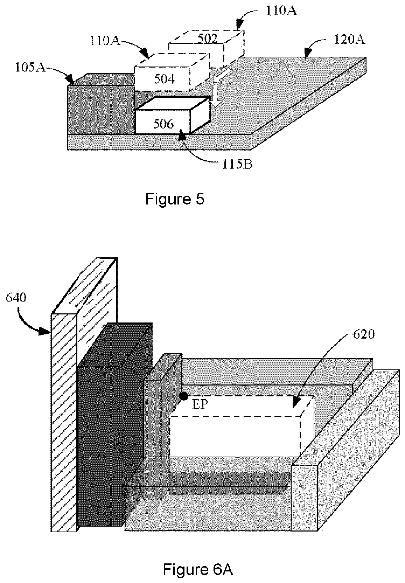

It can be seen that the above-mentioned three movement schemes can be applied in different situations. Therefore, in the embodiments of the present disclosure, a preferred movement scheme can be dynamically selected based on whether a collision occurs, which can efficiently place the object at the final target position while avoiding occurrence of a collision that the object may have. For example, in the specific examples described in Figures 5 to 7 below, in terms of safety and the amount of movement, the first movement scheme may be between the second movement scheme and the third movement scheme, while in terms of compactness of the object placement, the first movement scheme and the second movement scheme may be better than the third movement scheme. Of course, the performance of various movement schemes in terms of safety, amount of movement, and compactness of the object placement s may vary in different scenarios.

In some embodiments, whether the second movement scheme is feasible may be determined based on the tilt angle of the object and the horizontal buffer distance.

For example, the tilt angle of the object can be determined. The tilt angle of the object may represent the angle between the left side of the object in a tilted state and the horizontal plane, which can actually indicate the degree of tilt of the object. In some realization methods, the angle may be calculated in the front projection plane of the current object, for example, the above-mentioned angle may be represented as the angle between the projection line of the left side on the front projection plane and the horizontal projection line of the horizontal plane on the front projection plane. The front projection plane may be a plane parallel to the front side of the current object, and in the three projection plane system, it can also be referred to as the V plane. When projecting the current object onto the V plane along a direction perpendicular to the front side of the current object, the front projection of the current object can be formed.

Additionally, it can be understood that in most palletizing or packing scenarios, objects generally have a rectangular shape. For example, the sides of the object are usually at right angles to the front side and back side, and also at right angles to the top side and bottom side, while the front side and back side are at right angles to the top side and bottom side. Therefore, the current object being in a tilted state usually means that the side thereof has a non-zero angle with the z axis, and in this case, the bottom side of the current object also has a non-zero angle with the horizontal plane. Accordingly, when the current object is in a horizontal state, it usually means that the side of the current object is parallel to the z axis, in which case, the bottom side of the current object may be parallel to the horizontal plane.

The horizontal buffer distance may represent the horizontal distance between the front side of the current object and the closest adjacent object after the current object rotates from a tilted state to a horizontal state. In some embodiments, the horizontal distance may usually be calculated in the side projection plane of the current object, for example, the horizontal distance may be represented as the distance between the projection line of the front side of the current object on the side projection plane and the projection of the closest adjacent object on the side projection plane. The side projection plane may be a plane parallel to the side of the current object, and in the three projection plane system, it can also be referred to as the W plane. When projecting the current object onto the W plane along a direction perpendicular to the side of the current object, a side projection of the current object can be formed. The front and side of the current object may be defined based on the robot's angle of view. Of course, it may also be designated according to the actual application scenario. Regarding the horizontal plane projection mentioned earlier, it is actually the projection generated on the horizontal projection plane, which may be referred to the H plane in the three-projection plane system.

If the tilt angle of the object is greater than or equal to the angle threshold and the horizontal buffer distance is greater than the distance threshold, it can be determined that the second movement scheme is feasible. The angle threshold may be determined based on actual application requirements, application scenarios, and other factors, such as the movement parameters of the robot, etc. For example, the angle threshold can ensure that the robot tilts the current object at a certain tilt attitude. The distance threshold may be determined based on actual application requirements, application scenarios and other factors, for example, the distance threshold may be determined based on the environment. For example, the distance threshold may be 0. In this way, when the horizontal buffer distance is greater than 0, it may indicate that there is a certain buffer space between the current object and the adjacent objects when the current object rotates to the horizontal state.

If the tilt angle of the object is less than the angle threshold or the horizontal buffer distance is less than or equal to the distance threshold, it is determined that the second movement scheme is not feasible. It can be understood that, the comparison relationships herein, such as "less than", "less than or equal to", "greater than", and "greater than or equal to", may actually depend on the setting of the corresponding threshold. Therefore, in different scenarios, such relationships may be adjusted according to the specific threshold settings, and the scope of the technical solutions herein includes such variations.

In some embodiments, various appropriate methods may be used to determine the tilt angle of the object. For example, in one realization method, the tilt angle of the object may be obtained by sampling based on the theoretical tilt angle. For example, the theoretical tilt angle may be determined first. The theoretical tilt angle may represent the angle between the line connecting the first reference point and the second reference point on the front projection plane of the current object and the horizontal plane.

The first reference point may be the fulcrum projected on the front projection plane of the current object and located on the left side of the current object when the current object rotates from a tilted state to a horizontal state. As mentioned above, in palletizing or packing scenarios, the objects usually have a rectangular shape. In this case, the fulcrum is actually the point obtained by projecting the rotation axis of the current object from a tilted state to a horizontal state onto the front projection plane. Additionally, on the front projection plane, the line connecting the first reference point and the second reference point may not pass through any planes of the object placed in the environment. For example, the line connecting the first reference point and the second reference point may be above the object placed in the environment, or at most intersect with the points on the edges of the top side of the highest object placed in the environment. Therefore, with the first reference point given, the second reference point can be found in the environment according to the above-mentioned requirements of the line connecting the first reference point and the second reference point. For example, the first reference point may be a point directly above the target point, and at a certain distance from the target point, which may be determined based on factors such as actual application scenarios and business needs. For example, as mentioned above, the target point may be the point at the top, left, and rear sides of the current object when it is at its final target position. The second reference point may be a point on the sidewall of the environment (for example, if there is a sidewall and the sidewall is higher than all placed objects) or a point on the edge of the top side of another object (for example, if there is no sidewall and the other object is the highest object among the placed objects in the environment), as long as the requirements of the line connecting the first reference point and the second reference point are met.

The object tilt angle may be greater than the theoretical tilt angle and less than 90 degrees.

In some embodiments, the theoretical horizontal distance can be determined. The theoretical horizontal distance may represent the horizontal distance between the front side of the current object and the closest adjacent object when the current object is at the final target position on the side projection plane. The horizontal buffer distance may be determined based on the theoretical horizontal distance. The horizontal buffer distance may be less than theoretical horizontal distance. For example, the horizontal buffer distance may be obtained by sampling between 0 and the theoretical horizontal distance. In some realization methods, after determining the final target position, the theoretical horizontal distance may be obtained by referring to the information, such as the size of the current object, the size of the object placed around the final target position, etc. For example, size information of the object placed around the final target position may be obtained from image data collected by cameras targeting the placed objects. Of course, other methods may also be used to obtain the size information of the object placed around the final target position, which is not defined herein.

In some embodiments, when it is determined that the second movement scheme is feasible, the final path may be determined by using the second movement scheme, which may include a straight line path from the initial tilted position of the current object in the environment to the ready position, a rotation path from the ready position to the insertion position, and a top-down path from the insertion position to the final target position.

Specifically, the current object maintains the same tilted state when it is at the initial tilted position and the ready position, which may be determined by the above-mentioned object tilt angle. Additionally, as mentioned above, the initial tilted position to the ready position is a straight line path, and the initial tilted position and ready position may be at the same height. The heights of the initial tilted position and the ready position may be determined based on the distance from the first reference point to the bottom of the current object. For example, after determining the first reference point, the height of the first reference point itself can be obtained. In this way, the heights of the initial tilted position and the ready position are determined with reference to the distance from the first reference point to the bottom of the current object.

The ready position and the insertion position may both be above the final target position. The difference between the two lies in that the current object has a tilted state at the ready position, and after going through the rotation path, the current object has a horizontal state at the insertion position. As mentioned above, due to the existence of the horizontal buffer distance between the current object and adjacent object, the path from the insertion position to the final target position may be a diagonal path from top to bottom.

In some embodiments, if the second movement scheme is not feasible, a third movement scheme may be used to determine the final path. In this case, the final path may include a vertical straight line path from the starting position of the current object in the environment to the final target position. So it can be understood that the horizontal plane projections of the current object at the starting position and the final target position are overlapping. As mentioned above, the size of the projection area of the space at the final target position on the horizontal plane may be greater than or equal to the area of the bottom surface of the current object. In this way, the current object may be moved vertically from the starting position to the final target position.

It can be seen that the present disclosure provides three movement schemes. Depending on the different conditions of the environment, one of the three movement schemes may be dynamically and adaptively selected in order to avoid occurrence of a collision that the object may have, thereby efficiently completing the stacking of objects without the need for manual adjustment of relevant movement parameters during the entire process. In order to better understand the embodiments of the present disclosure, the description is provided below with reference to the specific examples. It should be understood that the following examples by no means limit the scope of the present disclosure.

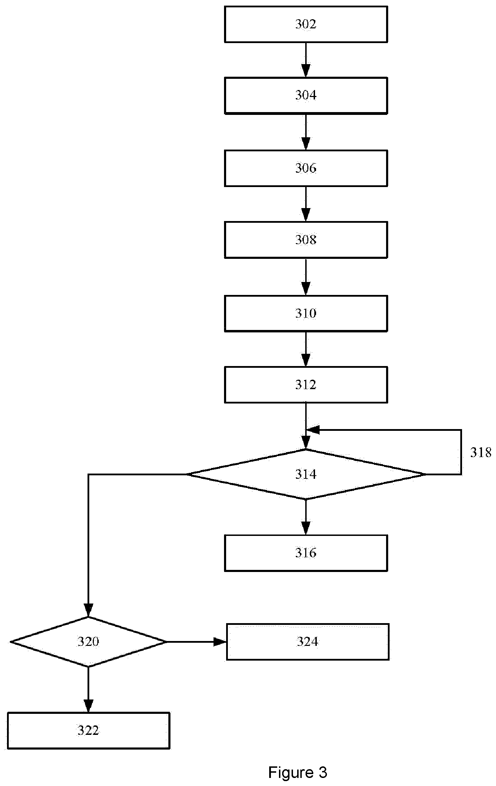

Figure 3 is a schematic flowchart illustrating the process for determining the path for placing the object according to some embodiments.

As shown in Figure 3, at step 302, the object placement situation in the environment can be determined. As mentioned above, a 3D camera may be used to capture images of the environment, and based on these images, the object placement situation in the environment is determined, such as whether objects have been placed, and the position and size of the object placed, etc.

At step 304, the final target position of the current object may be determined based on the object placement situation in the environment.

At step 306, the initial target position can be determined. The initial target position may be directly above the final target position.

For example, assume that the final target position may be represented as (*x*_{target}, *y*_{target}, *z*_{target}), then the initial target position may be represented as (*x*_{target}, *y*_{target}, *z*'_{target} ), where *z*'_{target} = *d* + *z*_{target}. For example, in some realization methods, d = 0.5*hᵢ*, where *hᵢ* is the height of the current object itself as mentioned above.

In step 308, at least one candidate entry position may be determined in the surrounding space.

For example, as mentioned above, the horizontal projection area of the surrounding space may be represented as (*x* ∈ [*xᵢ* - *a, xᵢ* + *lᵢ* + *a*], *y* ∈ [*yᵢ - b, yᵢ* + *wᵢ* + b]), where (*xᵢ*, *yᵢ*, *zᵢ*) may represent the coordinate of a designated point at the final target position. For example, the designated point may be the point at the bottom, left, and rear sides when the current object is at the final target position, and the left-right and front-rear directions may be predefined. (*lᵢ*, *wᵢ, hᵢ)* may represent the size of the current object, i.e., length, width, and height (for example, i may represent the index of the current object).

At least one candidate entry position may be at the same height as that of the initial target position, so a horizontal straight line path exists between each candidate entry position and the initial target position. Therefore, the z axis coordinate of each candidate entry position are the same, assumed to be *z*_{entry}, then *z*_{entry} = *z*'_{target} .
In step 310, the weight value for height of each candidate entry position can be determined.

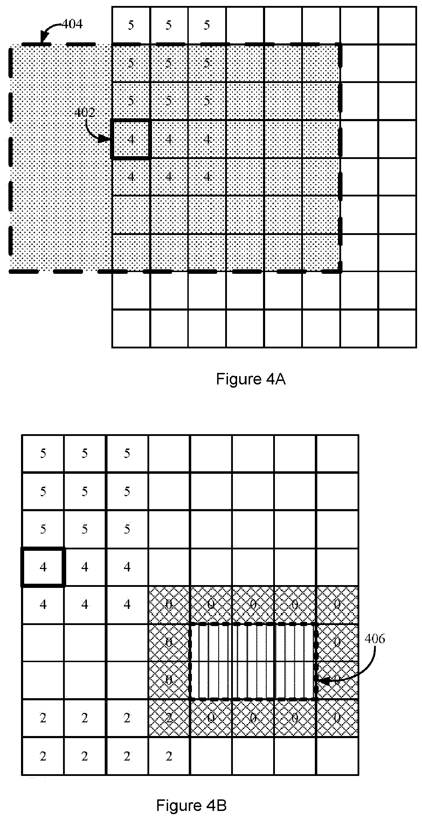

As mentioned above, the horizontal projection area of the environment may be divided into a plurality of equal-sized grids. Each grid may have a corresponding height value, which indicates the height occupied by the grid. For better understanding, the height values are described below with reference to the example in Figure 4A. Figure 4A shows an example of grid division associated with height values. For example, as shown in Figure 4A, the grid marked with "5" may indicate that an object has been placed, and the value "5" may indicate the height of the object. As mentioned above, the value "5" may be the actual height of the object, or the value obtained after processing the actual height of the object. The grid marked with "4" may indicate the grid to be occupied by the current object, i.e. the projection area of the current object on the horizontal plane at the final target position. The value "4" may indicate the height of the current object. The point at the upper left corner of a grid 402 may be the above-mentioned designated point, for example, it has the coordinate (*xᵢ, yi* , *zi).* In Figure 4A, a dashed area 404 may be the horizontal projection area of the surrounding space, for example, it may be represented as [*xᵢ* - *a, xᵢ* + *lᵢ* + *a*], *y* ∈ [*yᵢ* - *b, yᵢ* + *wᵢ* + *b*])*.*

In the horizontal projection area 404 of the surrounding space, at least one candidate entry position can be determined. For better understanding, Figure 4B shows an example of one candidate entry position. In the example of Figure 4B, the area 406 may represent the projection area of the current object on the horizontal plane when the current object is at the candidate entry position. As mentioned above, in palletizing or packing scenarios, the objects usually have a rectangular shape. In this case, the size of the area 406 may be equal to the area of the bottom surface of the current object. With regard to the candidate entry position, the weight value for height of the candidate entry position may be obtained by adding the height values of various grids around the area 406. For example, in the example of Figure 4B, the weight value for height of the candidate entry position may be equal to 2. Although in the example of Figure 4B, the weight value for height of the candidate entry position is calculated based on the height values of the ring of grids surrounding the area 406, as mentioned above, in other realization methods, the weight value for height of the candidate entry position may also be calculated based on the height values of two or more rings of grids surrounding the area 406. The present disclosure does not define this aspect.

In a similar way, the weight value for height may be determined with regard to each candidate entry position.

In step 312, the at least one candidate entry position may be sequenced in the ascending order of weight value for heights.

In step 314, it can be sequentially determined whether a candidate entry position exists with regard to the sequenced at least one candidate entry position so that no collision occurs when moving the current object along the horizontal straight line path from the candidate entry position to the initial target position.

Once it is determined that no collision occurs with regard to a candidate entry position proceed to step 316. In step 316, the final path may be determined based on the first movement scheme. Herein, the candidate entry position herein is referred to as the preferred entry position.

If it is determined that a collision occurs with regard to a certain candidate entry position, continue to determine whether a collision occurs with regard to the next candidate entry position, as shown by arrow 318.

If it is determined that a collision will occur with regard to all candidate entry positions, proceed to step 320.

In step 320, it can be determined whether the second movement scheme is feasible. For example, it may be determined whether the second movement scheme is feasible in the method mentioned above.

If the second movement scheme is feasible, in step 322, the second movement scheme may be used to determine the final path.

If the second movement scheme is not feasible, in step 324, the third movement scheme may be used to determine the final path.

For better understanding, Figure 5 shows an example of the application scenario for the first movement scheme. Example in Figure 5 is described with reference to the example in Figure 1A, therefore the same reference numeral is still used.

The first movement scheme may use horizontal and vertical straight line movements. For example, in the example of Figure 5, the final path to place the current object 110A at the final target position 506 may include a horizontal straight line path from the preferred entry position 502 to the initial target position 504, and a vertical straight line path from the initial target position 504 to the final target position 506.

Figure 6A to Figure 6C show examples of application scenarios for the second movement scheme.

Figure 6A shows a schematic diagram of the current object 620 being placed at the final target position. Therefore, in the example of Figure 6A, the position of the current object 620 may be the final target position. Additionally, in the example of Figure 6A, assume that the environment for placing objects has a sidewall 640, and each object is placed with reference to the sidewall.

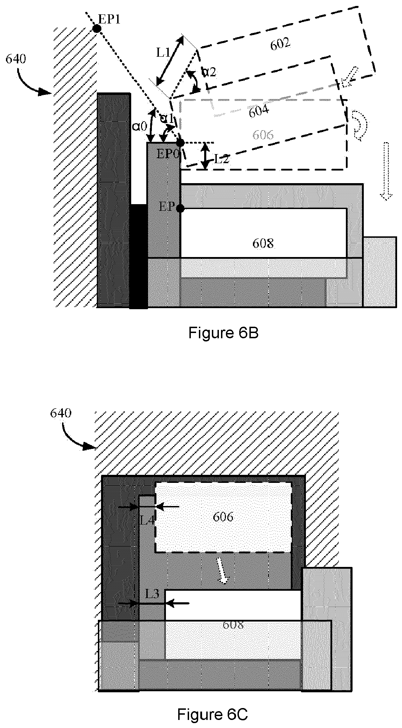

Figure 6B shows the corresponding front view of Figure 6A, i.e. the view of the current object on the front projection plane. Additionally, Figure 6B shows the final path determined by using the second movement scheme. Figure 6C shows the corresponding side view of Figure 6A in terms of the right angle, i.e. the view of the current object on the side projection plane. For clear illustration and better explanation of the movement path of the current object 620, Figures 6B and 6C do not further show the reference numeral "620", but instead show the various positions of the current object 620 during the movement process.

Firstly, how to determine whether the second movement scheme is feasible is described. As shown in Figure 6B, the theoretical tilt angle α0 may be determined first. The theoretical tilt angle α0 may be the angle between the connecting line passing through the first reference point EP0 and the second reference point EP1 and the horizontal line. In the front view of Figure 6B, it can be seen that the first reference point EP0 may be the fulcrum for the current object to rotate from the tilted state to the horizontal state, and the fulcrum is on the left side of the current object. For example, the first reference point EP0 may be determined based on the target point EP. As shown in Figure 6A, the target point EP may be the point at the top, left, and rear sides of the current object 620 when it is at the final target position. As shown in Figure 6B, the first reference point EP0 may be a point located above the target point EP. For example, the first reference point EP0 may be directly above the target point EP, at a certain distance from the target point EP, and this distance may be determined according to the actual application scenario, business needs, etc.

The second reference point EP1 may be determined based on the requirements of the line connecting the first reference point EP0. As mentioned above, the line connecting the first reference point EP0 and the second reference point EP1 should not pass through any plane of the object placed in the environment. For example, the connecting line should be above the object placed in the environment, or at most intersect with the points on the edges of the top side of the highest object placed in the environment. For example, in the example of Figure 6B, as the sidewall 640 is higher than the object placed in the environment, the second reference point EP1 may be the vertex on the sidewall 640. Of course, in some cases there may be no sidewalls, so the second reference point EP1 may be a point on the edge of the top side of the highest object among other objects placed.

Then, the object tilt angle α1 may be determined based on the theoretical tilt angle α0, i.e. the tilt angle when the current object is currently in a tilted state. The object tilt angle α1 may be greater than the theoretical tilt angle α0 and less than 90 degrees. For example, the object tilt angle α1 may be obtained through sampling. As shown in Figure 6B, the object tilt angle α1 may be the angle between the left side of the current object and the horizontal plane.

In addition, the theoretical horizontal distance L3 can be determined. As shown in the side view of Figure 6C, the theoretical horizontal distance L3 may represent the distance between the front side of the current object and the closest adjacent object when the current object is at the final target position 608. The horizontal buffer distance L4 may be determined based on the theoretical horizontal distance L3. As shown in the side view of Figure 6C, the horizontal buffer distance L4 may be the horizontal distance between the front side of the current object after rotating from a tilted state to a horizontal state and the closest adjacent object. For example, the horizontal buffer distance L4 may be determined by sampling. The horizontal buffer distance L4 is less than the theoretical horizontal distance L3. For example, sampling may performed between 0 and L3 to determine the horizontal buffer distance L4.

Based on the tilt angle α1 of the object and the horizontal buffer distance L4, it can be determined whether the second movement scheme is feasible. For example, if the tilt angle α1 of the object is greater than or equal to the angle threshold and the horizontal buffer distance L4 is greater than the distance threshold, it can determined that the second movement scheme is feasible. Otherwise, the second movement scheme is not feasible. The distance threshold may be determined based on factors such as the actual application scenario, for example, it can be calculated based on the environment where the current object is to be placed.

In the case where the second movement scheme is feasible, the final path can be determined. For example, Figure 6B shows the final path for placing the current object at the final target position 608. As shown in Figure 6B, the current object may be moved along a straight line path from the initial tilted position 602 to the ready position 604. Additionally, as shown in Figure 6B, when the current object moves from the initial tilted position 602 to the ready position 604, the moving distance may be L1, and the angle maintained during the movement may be α2. Angle α2 may be determined based on the object tilt angle α1. The moving distance L1 may be determined according to the actual application scenario and other factors. It can be seen that at the initial tilted position 602 and the ready position 604, the current object has the same tilted state and maintains the same height. The height may be determined based on a tilted height L2 and the first reference point EP0. For example, as shown in Figure 6B, the tilted height L2 may represent the distance from the first reference point EP0 to the bottom of the current object.

Then, the current object may be rotated from the ready position 604 to the insertion position 606 (i.e., the rotation path), so that the current object has a horizontal state at the insertion position. Afterwards, the current object may be moved in a top-down manner to the final target position 608 (i.e., the top-down path). With reference to the examples in Figures 6B and 6C, due to the buffer distance between adjacent objects, the movement of the current object to the final target position 608 in a top-down manner may be a diagonal path.

In can be seen that the second movement scheme can adapt to more complex placement environments and is conducive to improvement of the stacking compactness. In addition, compared to the first movement scheme, the buffer space required for the second movement scheme can be smaller.

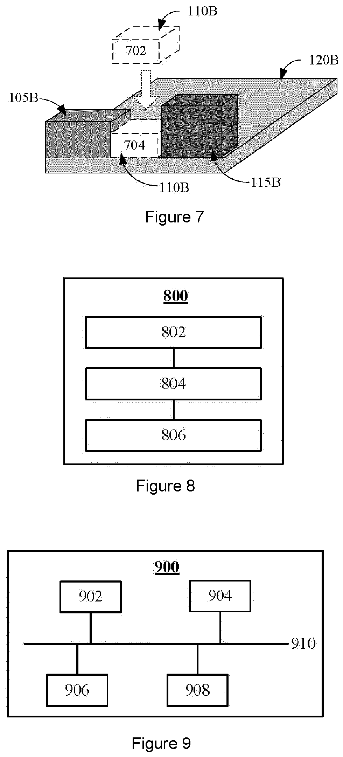

Figure 7 shows an example of the application scenario for the third movement scheme. Figure 7 is described below with reference to the example shown in Figure 1B, and therefore the same reference numerals as Figure 1B are used in Figure 7.

As shown in Figure 7, the current object 110B may be moved directly from the starting position 702 to the final target position 704 along a vertical straight line path. The starting position 702 is directly above the final target position 704, which means the projections thereof on the horizontal plane are overlapping.

It can be seen that the path planning of the third movement scheme is relatively simple and can be applied to some placement environments with lower requirements. For example, in environments with lower requirements for stacking compactness and more relaxed placement space, the third movement scheme may be adopted.

Figure 8 is a schematic block diagram illustrating the apparatus for determining the path for placing the object according to some embodiments.

As shown in Figure 8, the apparatus 800 may include a first determination unit 802, a second determination unit 804 and a third determination unit 806.

The first determination unit 802 can determine the final target position of the current object to be placed in the environment based on the object placement situation in the environment.

The second determination unit 804 can determine whether a collision occurs when
moving the current object in a horizontal straight line to the initial target position in the surrounding space of the final target position. The horizontal plane projections of the current object at initial target position and the final target position are overlapping, and the initial target position and the final target positions are at different heights.

The third determination unit 806 can determine the final path for placing the current object at the final target position based on the result from the determination on whether a collision occurs. No collision will occur when the current object moves along the final path.

The individual units of the apparatus 800 can execute specific processes described in terms of the decoding device. Therefore, for brevity, the specific operations and functionalities of the individual units of the apparatus 800 will not be repeated here.

Figure 9 is a schematic block diagram illustrating the apparatus for determining the path for placing the object according to some embodiments.

As shown in Figure 9, the apparatus 900 may include a processor 902, a memory 904, an input interface 906, and an output interface 908, which are coupled together via a bus 910. However, it should be understood that Figure 9 is for illustrative purposes only rather than limiting the scope of the present disclosure. For example, in different application scenarios, the apparatus 900 may include more or fewer modules, which is not defined herein.

The memory 904 may be used to store various data related to the functions or operations of the apparatus 900 (such as information related to various positions, paths mentioned herein, etc., altitude values, weight value for heights, etc.), executable instructions or executable code. For example, the memory 904 may include, but is not limited to, Random Access Memory (RAM), Read-Only Memory (ROM), Flash memory, Programmable ROM (PROM), erasable PROM (EPROM), registers, hard disks, and the like.

The processor 902 may be used to execute or realize various functions or operations of the apparatus 900, such as the various operations for determining the path for placing the object described herein. For example, the processor 902 may execute executable code or instructions stored in the memory 904, thereby realizing various processes described in various embodiments of the present disclosure. The processor 902 may include various applicable processors, such as a general-purpose processor (e.g., Central Processing Unit, CPU), specialized processors (e.g., digital signal processors, graphics processing units, Application-Specific Integrated Circuits, etc.).

The input interface 906 can receive various forms of data, messages, or information. For example, the input interface 906 can receive some information about the environment mentioned herein, such as receiving images of the environment from a 3D camera. In some realization methods, the input interface 906 can further realize communication based on wired or wireless communication standards.

The output interface 908 can output various forms of data, messages, or information. For example, the output interface 908 can output the final path described herein so as to control the robot to place the current object at the final target position. In some realization methods, the output interface 908 may realize communication based on various applicable wired or wireless communication standards.

The embodiments of the present disclosure further provide a computer-readable storage medium. The computer-readable storage medium may store an executable code, and the executable code, when executed by a computer, allows the computer to realize the specific processes described above.

For example, the computer-readable storage medium may include, but is not limited to, Random Access Memory (RAM), Read-Only Memory (ROM), Electrically-Erasable Programmable Read-Only Memory (EEPROM), Static Random Access Memory (SRAM), hard disk, flash memory, and the like.

The above-described specific embodiments of the present disclosure have been described. Other embodiments are within the scope of the appended Claims. In some cases, actions or steps described in the Claims can be performed in a different order than that of the embodiments and still achieve the desired results. Additionally, the processes depicted in the drawings do not necessarily require specific or continuous sequences to achieve the desired results. In some embodiments, multitasking and parallel processing are also possible or advantageous.

Not all steps and units depicted in the above-mentioned flowcharts and system diagrams are required; certain steps or units may be omitted based on actual needs. The apparatus structures described in the above-mentioned embodiments can be physical or logical structures, that is, some units may be realized by the same physical entity, while others may be realized by multiple physical entities or may be jointly realized by certain components in multiple separate devices.

Throughout this Specification, the term "exemplary" means "serving as an example, instance, or illustration" and does not imply "preferred" or "advantageous" over other embodiments. Specific embodiments include specific details to facilitate understanding of the described technology. However, these technologies can be implemented without these specific details. In some instances, to avoid causing difficulties in understanding the concepts of the described embodiments, known structures and devices are shown in block diagram form.

The above-mentioned description of the present disclosure is provided to allow any person skilled in the art to realize or use the present disclosure. Various modifications to the present disclosure will be apparent to those skilled in the art, and the general principles and novel features defined herein can be applied to other variations without departing from the protection scope of the present disclosure. Therefore, the present disclosure is not limited to the exemplary embodiments and designs described herein but is consistent with the broadest scope defined by the principles and novelty features disclosed herein.

## Claims

1. A method for determining a path for placing an object, comprising:
determining (202) a final target position of a current object to be placed in an environment based on an object placement situation in the environment;
determining (204) whether a collision occurs when moving the current object in a horizontal straight line to an initial target position in surrounding space of the final target position, wherein horizontal plane projections of the current object at the initial target position and the final target position are overlapping, and the initial target position and the final target positions are at different heights;
and determining (206) a final path for placing the current object at the final target position based on the result from the determination on whether a collision occurs, wherein no collision will occur when the current object moves along the final path.

2. The method according to Claim 1, wherein the step of determining whether a collision occurs comprises:
determining at least one candidate entry position in the surrounding space, wherein the at least one candidate entry position and the initial target position are at a same height;
sequentially determining whether a candidate entry position exists with regard to at least one candidate entry position so that no collision occurs when moving the current object along a horizontal straight line path from the candidate entry position to the initial target position.

3. The method according to Claim 1, further comprising:
determining a weight value for height of each candidate entry position, wherein the weight value for height of each candidate entry position is used to indicate the occupancy of the space around the candidate entry position;
the step of sequentially determining whether a candidate entry position exists with regard to at least one candidate entry position so that no collision occurs when moving the current object along a horizontal straight line path from the candidate entry position to the initial target position, comprising:
in an ascending order of the weight value for heights, sequentially determining whether a candidate entry position exists with regard to at least one candidate entry position so that no collision occurs when moving the current object along a horizontal straight line path from the candidate entry position to the initial target position.

4. The method according to Claim 3, wherein the step of determining the weight value for height of each candidate entry position comprises:
determining the weight value for height of each candidate entry position, wherein the surrounding space is divided into a plurality of equal-sized grids on the horizontal plane; each grid has a height value; the height value of each grid is used to represent the height of the object occupying the grid; and the weight value for height of each candidate entry position is obtained by adding the height values of each grid in a peripheral area of a projection area on the horizontal plane when the current object is at the candidate entry position.

5. The method according to any one of Claims 1 to 4, further comprising:
determining the surrounding space, wherein the projection area of the surrounding space on the horizontal plane is obtained by expanding the predetermined range for the projection area of the object, and the projection area of the object is the projection area of the current object on the horizontal plane when the current object is at the final target position.

6. The method according to Claim 2, wherein the step of determining the final path comprises:
if it is determined that no collision occurs when moving the current object from a preferred entry position (502) along a horizontal straight line path to the initial target position (504), using a first movement scheme to determine the final path, wherein the first movement scheme adopts horizontal straight line movement and vertical straight line movement,
the preferred entry position (502) is a first candidate entry position when sequentially determining whether a collision occurs with regard to at least one candidate entry position so that the current object does not have a collision,
and the final path comprises a horizontal straight line path from the preferred entry position (502) to the initial target position (504), and a vertical straight line path from the initial target position (504) to the final target position (506).

7. The method according to Claim 1, wherein the step of determining the final path comprises:
if it is determined that a collision occurs when moving the current object in a horizontal straight line from the surrounding space of the final target position to the initial target position, determining whether a second movement scheme is feasible, wherein the second movement scheme will allow the current object to be inserted in a tilted state in order to reach the final target position;
if the second movement scheme is feasible, using the second movement scheme to determine the final path;
if the second movement scheme is not feasible, using a third movement scheme to determine the final path, wherein the third movement scheme will allow the current object to reach the final target position in a top-down manner.

8. The method according to Claim 7, wherein the step of determining whether the second movement scheme is feasible comprises:
determining a tilt angle (α1) and a horizontal buffer distance (L4) of the object, wherein the tilt angle (α1) represents the angle between a left side of the current object when it is in a tilted state and the horizontal plane, and the horizontal buffer distance (L4) represents a horizontal distance between a front side of the current object and a closest adjacent object after the current object rotates from a tilted state to a horizontal state;
if the tilt angle (α1) of the object is greater than or equal to an angle threshold and the horizontal buffer distance (L4) is greater than a distance threshold, determining that the second movement scheme is feasible; and
if the tilt angle (α1) is less than the angle threshold or the horizontal buffer distance (L4) is less than or equal to the distance threshold, determining that the second movement scheme is not feasible.

9. The method according to Claim 8, wherein the step of determining the tilt angle of the object comprises: determining a theoretical tilt angle (α0), wherein the theoretical tilt angle (α0) represents an angle between the line connecting a first reference point (EPO) and a second reference point (EP1) and the horizontal plane, the first reference point (EPO) is a fulcrum projected onto the front projection plane of the current object and located on the left side when the current object rotates from the tilted state to the horizontal state, and on the front projection plane, the line connecting the second reference point (EP1) and the first reference point (EPO) does not pass through any plane of placed object in the environment;
determining the tilt angle (α1) of the object based on the theoretical tilt angle (α0), wherein the tilt angle (α1) of the object is greater than the theoretical tilt angle (α0) and less than 90 degrees.

10. The method according to Claim 8, wherein the step of determining the horizontal buffer distance comprises: determining a theoretical horizontal distance (L3), wherein the theoretical horizontal distance (L3) represents a horizontal distance between the front side and a closest adjacent object when the current object is at the final target position;
determining the horizontal buffer distance (L4) based on the theoretical horizontal distance (L3), wherein the horizontal buffer distance (L4) is less than the theoretical horizontal distance (L3).

11. The method according to Claim 8, wherein the step of using the second movement scheme to determine the final path comprises:
determining the final path, wherein the final path comprises a straight line path from an initial tilted position (602) of the current object in the environment to a ready position (604), a rotation path from the ready position (604) to the insertion position (606), and a top-down path from the insertion position (606) to the final target position (608);
the current object has the same tilted state when it is at the initial tilted position (602) and the ready position (604); the tilted state is determined based on the object's tilt angle (α1); heights of both the initial tilted position (602) and the ready position (604) are determined based on a distance (L2) from the first reference point (EPO) to a bottom of the current object; and the ready position (604) and the insertion position (606) are located above the final target position.

12. The method according to Claim 7, wherein the step of using the third movement scheme to determine the final path comprises:
determining the final path, wherein the final path comprises a vertical straight line path from the starting position (702) of the current object in the environment to the final target position (704), wherein the horizontal plane projections of the current object at the starting position (702) and the final target position (704) are overlapping.

13. An apparatus for determining a path of an object, comprising:
a first determination unit, configured to determine a final target position of a current object to be placed in an environment based on an object placement situation in the environment;
a second determination unit, configured to determine whether a collision occurs when moving the current object in a horizontal straight line to an initial target position in surrounding space of the final target position, wherein horizontal plane projections of the current object at the initial target position and the final target position are overlapping, and the initial target position and the final target positions are at different heights; and
a third determination unit, configured to determine a final path for placing the current object at the final target position based on the result from the determination on whether a collision occurs, wherein no collision will occur when the current object moves along the final path.

14. An apparatus for determining a path for placing an object, comprising:
at least one processor;
a memory in communication with the at least one processor, wherein the memory stores an executable code, and the executable code, when executed by the at least one processor, allows the at least one processor to perform the method according to any one of Claims 1 to 12.

15. A computer-readable storage medium, wherein the computer-readable storage medium stores an executable code, and the executable code, when executed, allows a computer to perform the method according to any one of Claims 1 to 12.
